# EUROPEAN PATENT SPECIFICATION

(11) **EP 2 405 135 B1**
(45) Date of publication and mention of the grant of the patent: **17.10.2018**
(21) Application number: 11005490.5
(22) Date of filing: 06.07.2011
(51) Int. Cl.: F03D 7/02, F03D 9/25, H02P 25/024

(54) **Methods for overcoming unwanted effects by cogging torque of the generator in a wind turbine**
Verfahren zum Überwinden unerwünschter Effekte durch Drehmomentwelligkeit des Generators in einer Windkraftanlage
Procédés pour surmonter les effets indésirables dus aux fluctuations de couple du génerateur d'une éolienne

(30) Priority: 09.07.2010 ES 201000882
(43) Date of publication of application: 11.01.2012
(73) Proprietor: Gamesa Innovation & Technology, S.L., 31621 Sarriguren (ES)
(72) Inventor: Birk, Jens, 48170 Zamudio- Bizkaia (ES)

(56) References cited:
- EP-A1- 2 164 165
- EP-A2- 2 043 255
- WO-A1-03/105318

## Description

### FIELD OF THE INVENTION

The invention relates to methods for overcoming unwanted effects by cogging torque in a wind turbine having a Permanent Magnet (PM) generator and to a wind turbine having control systems for implementing such methods.

### BACKGROUND

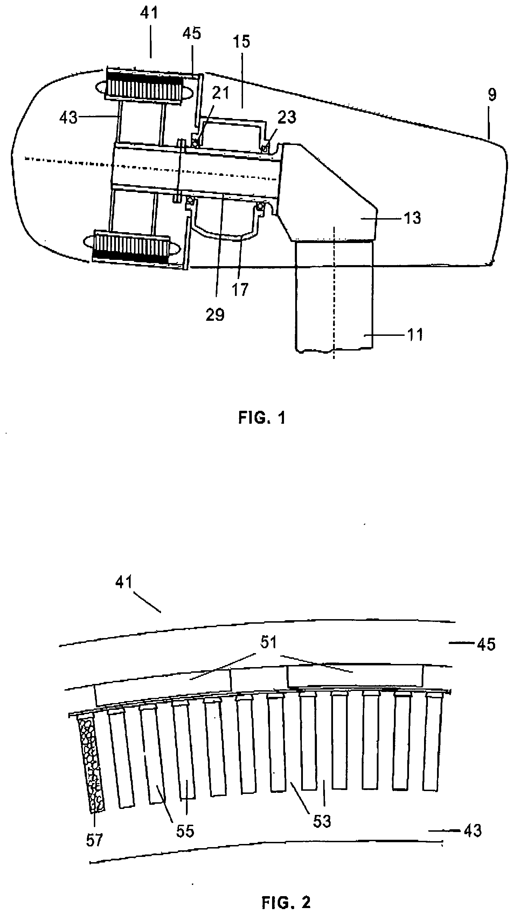

In a Permanent Magnet (PM) generator or motor as shown in Figure 2 the rotor 45 contains permanent magnets 51 and the stator 43 contains stacked laminations which are steel plates. The stator laminations contain slots 55, in which the windings 57 are placed, and teeth 53 which are the laminations between the slots 55. The magnets 51 in the rotor will naturally be attracted to the magnetic material in the stator 43 or more specifically to the teeth 53.

Hence by rotating the rotor 45 of the PM machine it will try to find an equilibrium position where the magnets 51 are attracted to the stator teeth 53. Hence moving the rotor 45 away from the teeth 53 will require a certain force. By continuing rotating the rotor 45, the next tooth 53 will appear in the direction of rotation and hence the magnets 51 in the rotor will be attracted to the magnetic material in the tooth 53 and hence drive the rotation towards the next equilibrium position.

Hence rotating a PM machine rotor 45 slowly in continuously speed will imply a force first to move the rotor away from an equilibrium position and followed after with the need of a force to hold the rotor and avoid it to move too fast to the next equilibrium position.

This will normally be a sinusoidal force that will be needed, depending on the geometry of rotor 45 and stator 43. This needed torque is called the cogging torque.

Typically the cogging torque is reduced as much as possible in the design of the electrical machine by either skewing the magnets 51 on the rotor 45 or skewing the slots 55 on the stator 43 as disclosed, for example, in US 2008/0036215.

However, due to manufacturing tolerances the cogging torque can not be reduced to 0.

EP 2 043 255 and EP 2 164 165 concern systems and methods for controlling torque ripple and acoustic noise in synchronous machines. When using the PM machine as a motor the rotation will always be affected by this phenomena, and hence the rpm will always contain a small portion of torque fluctuation with the slot passing frequency. For certain motors this can not be accepted as they have to run 100% smooth and hence the fluctuations are compensated by controlling the power to the motor and hereby speeding up and slowing down the rotor to compensate for the small variations. This is done by controlling the current to the motor in a frequency converter.

Similar it is known that when using the PM machine as generator there will be a torque fluctuation due to the slot passing frequency. This is typically 1-2% of the nominal torque and can also be compensated by controlling the current via a frequency converter.

In the case of wind turbines with PM generators in idling situation and hence no load or in case of no grid this cogging torque is introducing torque variation of approx 1% of the nominal torque. Particularly in the case of a direct drive machine with PM generator this cogging torque will be visible directly at the rotor and hence could cause some problems.

The cogging torque could cause the rotor to stand still at an equilibrium position. This standing still of the rotor could prevent the lubrication of the main bearings and hence could lead to friction marks in the bearings and hence damage of this part of the wind turbine.

The present invention focuses on finding a solution for these drawbacks.

### SUMMARY OF THE INVENTION

An object of the present Invention Is to provide a method for avoiding the stand still of the rotor in an idling situation in wind turbines having a permanent magnet generator.

Another object of the present invention is to provide a method for controlling the rotor speed in an idling situation in wind turbines having a permanent magnet generator.

These objects are met by providing a method for operating a wind turbine, preferably a direct drive wind turbine, comprising a permanent magnet generator driven by a wind rotor that supply power to an electric grid through a power electronics unit that, in an idling situation that create a cogging torque that can stop the wind rotor, the frequency converter of said power electronics unit is arranged for controlling the current so that an opposing torque to said cogging torque is created allowing a free idling situation and said idling situation is detected when one of the following cases occurs: a) a situation where the instantaneous or the lowpass-filtered rotor speed Wᵢ, W_{f}, whether in a single instant or along a time interval T1, is below a predetermined value for each case; b) a situation where there are variations of the instantaneous or the lowpass-filtered rotor speed Wᵢ, W_{f} above first predetermined values due to cogging torque in a time interval T2. c) a situation where there are variations of the Instantaneous or the lowpass-filtered rotor speed Wₗ, W_{f} above second predetermined values due to cogging torque in a time interval T2 and the minimum or averaged instantaneous or lowpass-filtered rotor speed Wᵢ, W_{f} in said time interval T2 is below a predetermined value for each case. One or more of said methods can be implemented in the wind turbine depending on its particular circumstances.

In one preferred embodiment, the frequency converter is arranged for making the generator run at the speed rpm_{ref} of a free idling situation. Hereby it is achieved a method that can reuse control schemes and control methods which usually are already implemented in the wind turbine.

In another preferred embodiment, the frequency converter is arranged for outputting a fixed current at the fixed frequency corresponding to the generator speed rpm_{ref} of a free idling situation. Hereby it is achieved an stable method at very low speed.

In another preferred embodiment, said frequency converter is arranged to apply a current-shaping to the output current for producing said opposing torque. Hereby is achieved a method which is very fast reacting to the cogging torque variations thus allowing a very low idling speed.

In another aspect, the above-mentioned objects are met by providing a control system for a wind turbine comprising a permanent magnet generator driven by a wind rotor that supply power to an electric grid through a power electronics unit including a frequency converter, devices for measuring or estimating at least rotor speed *W*, generator speed *rpm*, current *I* and torque *T*, that also comprises a control unit connected to said devices and to said frequency converter adapted to carry out the above mentioned method.

In another aspect, the above-mentioned objects are met by providing a wind turbine comprising said control system.

Other features and advantages of the present invention will be understood from the following detailed description of illustrative and by no means limiting embodiments of its object in relation with the enclosed drawings.

### BRIEF DESCRIPTION OF DRAWINGS

Figure 1 is a schematic section side view of a direct drive wind turbine having the generator placed upwind the wind rotor.
Figure 2 is a schematic partial section side view of a PM generator.
Figure 3 is a block diagram of a wind turbine with a converter for implementing the method of this invention.
Figure 4 is a block diagram of a first embodiment of a method for counteracting the cogging torque according to the present invention.
Figure 5 is a block diagram of a second embodiment of a method for counteracting the cogging torque according to the present invention.
Figure 6a and 6b are Speed vs. Time curves for, respectively, an instantaneous speed signal and an speed signal filtered with a lowpass filter for illustrating different methods for detecting when the generator speed or rotor speed is near 0.

### DETAILED DESCRIPTION OF PREFERRED EMBODIMENTS

Figure 1 shows a direct drive wind turbine having the generator placed upwind the rotor comprising a tower 11 supporting means housed inside a nacelle 9 for converting the rotational energy of the wind turbine rotor 15 into electrical energy by means of a permanent magnet generator 41. The wind turbine rotor 15 comprises a rotor hub 17 and, typically, three blades (not shown in Fig. 1). The rotor hub 17 is placed on two main bearings 21, 23, the first bearing 21 being placed near to the rotor hub front and the second bearing 23 near to the rotor hub rear. Both bearings 21, 23 are positioned on a non-rotating main shaft 29 connected to the wind turbine main frame 13. The wind turbine generator 41 is placed in front of the rotor hub 17. The generator stator 43 is connected to the non-rotating main shaft 29 and the generator rotor 45 is connected to the rotor hub 17.

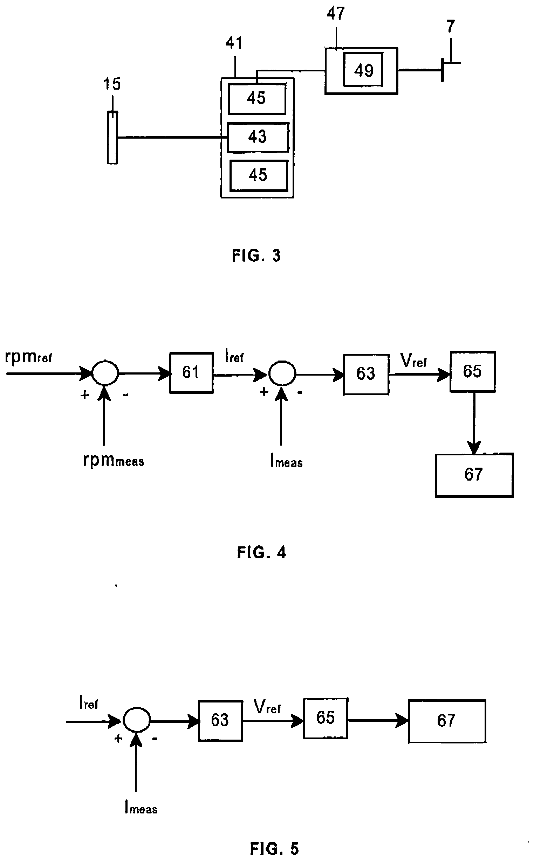

As shown in Figure 3 the permanent magnet generator 41 with rotor 45 and stator 43 is connected to the grid 7 through a power electronics unit 47.

The power electronics unit 47 comprises a frequency converter 49 for carrying out the conversion of power produced by the generator 41 to power that is synchronized with power of the electrical grid 7 and additional elements such as storage elements that can be used for to provide energy to the wind turbine and dissipative elements that can be used for consuming energy.

The wind turbine power output is typically controlled by means of a control system for regulating the pitch angle of the rotor blades and the generator torque. The rotor rotational speed and power output of the wind turbine can hereby be initially controlled. In particular said control means include a controller which receives signals indicating the speed of the generator 41 and the power produced by the generator 41 and which provides a torque reference signal to the converter 49 to obtain the required power.

The basic idea of the present invention for counteracting the cogging torque in a wind turbine such that has just been disclosed in an idling situation, is using said control means for creating an opposing torque to said cogging torque, enabling a free idling where the rotor 15 rotates slowly avoiding the damages caused in the bearings 21, 23 by any stopping of the rotor 15 caused by the cogging torque.

As an example a 3MW machine running at 14.3 rpm will have a torque of 2000 kNm. This will give a torque fluctuation by idling of +/- 10 kNm. This torque fluctuation could be enough under a certain wind speed to stop the rotor 15 from rotating/idling and hence act as a disc brake holding the rotor 15 in a fixed position. The holding of the rotor would introduce higher loads on the wind turbine than an idling rotor that would naturally find a position with load equilibrium and hence minimum load into the wind turbine.

For a better understanding of this invention it shall be noted that the following terms shall be understood with the following meaning:
- Idling situation: The rotor is rotating slowly and there is no power production. The pitch angle is typically at a fixed value between 45 and 90 degrees dependent on the wind turbine type.
- Normal rotor speed during free idling: The rotor speed which would occur if there was no cogging torque in the generator. This value will typically be around 1 rpm.

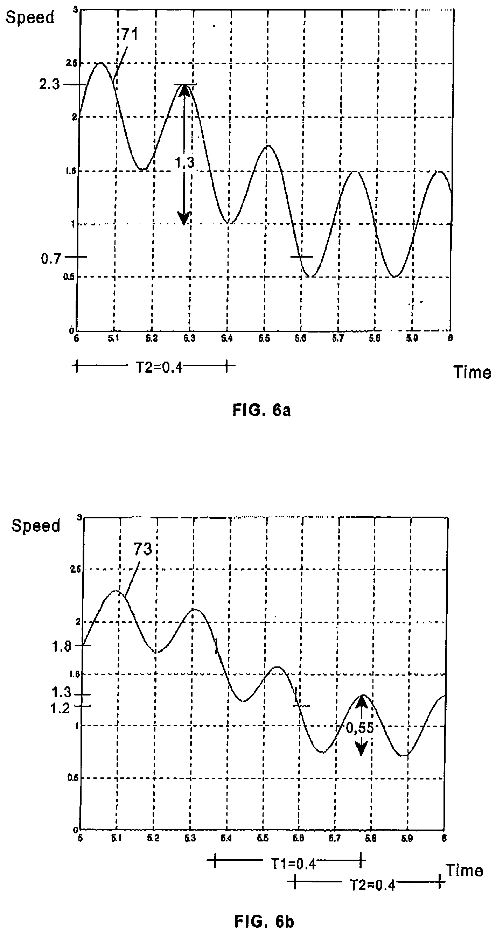

The method according to the present invention would be activated when the rotor speed is close to 0. The possible detection method for the 'close to 0' condition includes, but is not limited to the following cases that will be explained in reference to the instantaneous speed signal 71 shown in Figure 6a or the lowpass-filtered speed signal 73 shown in Figure 6b.
- Detecting when the instantaneous speed Wᵢ is below a certain value. If this value is, for example, 0.7 rpm this will happen at time 5.6 s (see Figure 6a),
- Detecting when a lowpass-filtered value W_{f} of the speed is below a certain value. If this value is for example 1.20 rpm this will happen at time 5.6 s (see Figure 6b).
- Detecting when a lowpass-filtered value W_{f} of the speed is below a certain value for a certain time. If those values are for example 1.8 rpm and 0.4 s this will happen at time 5.77 s (see Figure 6b).
- Detecting when there are variations of the speed (instantaneous Wᵢ or filtered value W_{f}) due to cogging torque in a certain time above certain value. If those values are for example 1.3 rpm (instantaneous speed) and 0.4 s this will happen at time 5.4 s (see Figure 6a).
- Detecting when the speed (instantaneous Wᵢ or filtered value W_{f}) is below a certain value for a certain time while at the same time speed variations due to cogging torque are above a certain value. If those values are, for example, 1.3 rpm (filtered speed), 0.4 s and 0,55 rpm this will happen at time 5,99 s (see Figure 6b).

The speed of the rotor can be detected directly by a speed sensor such as an encoder, resolver or Hall element and the speed can be measured by the frequency converter or by the PLC or PC control system in the wind turbine. Alternatively the speed can be estimated from voltage and/or current signals in the frequency converter.

In one embodiment said control means are used in idling situations that create a cogging torque that can stop the rotor for arranging said frequency converter 49 for making the generator 41 run at the speed of a free idling situation. In particular, the frequency converter 49 is run in speed-control mode, where the setpoint generator speed rpm_{ref} is equal to the normal rotor speed during idling. The control method used in the frequency converter 49 is shown in Figure 4. The inputs to the control scheme are the desired generator speed rpm_{ref}, which in this case is the normal rotor speed during idling, the measured or estimated generator speed rpmₘₑₐₛ and the measured current Iₘₑₐₛ. The difference between rpm_{ref} and rpmₘₑₐₛ is sent to a torque or current controller 61 which sends the current reference I_{ref} to block 63 responsible of calculating the reference output voltage V_{ref} to the generator 41. The voltage reference V_{ref} is sent to the block 65 which sends pulse-width modulated signals to the generator-side semiconductors 67, e.g. IGBT's, of the frequency converter 49.

In another embodiment said control means are used in idling situations that create a cogging torque that can stop the rotor for arranging said frequency converter 49 for outputting a fixed current at the fixed frequency corresponding to the rotor/generator speed in a free idling situation. In this case a speed feedback signal is not needed in the frequency converter 49. The control method used In the frequency converter is shown in Figure 5. The control scheme is similar to Figure 4 except that the torque or current controller 61 is omitted and the inputs to the control scheme are therefore only the desired generator current I_{ref} and the measured current Iₘₑₐₛ.

In another embodiment said control means are used in idling situations that create a cogging torque that can stop the rotor arranging said frequency converter 49 to apply a current-shaping to the output current such that current waveform that produces said opposing torque making the resulting torque zero.

The amplitude of the cogging torque is depending on manufacturing tolerances and will differ from one generator to another. Thereby different current amplitudes are needed to counteract the cogging torque. Hence the cogging torque should be measured and the current shaping calibrated before using the method in the wind turbine.

Another requirement of this embodiment Is that the phase angle of the shaped current has to be equal to the phase angle of the cogging torque. This is to avoid that the torque provided by the generator current is amplifying the cogging torque instead of reducing it. The phase angle of the shaped current therefore must be in a fixed relationship with the measured or estimated rotor position and the number of slots in the stator.

This invention is preferably applicable to direct drive wind turbines because in wind turbines with gearbox the absolute torque cogging Is reduced with the gear ratio, and as this is typically 1:8 for 1 stage gearbox, 1:40 for a 2 stage gearbox and 1:100 for a 3 stage gearbox the cogging torque of 1 % of the nominal torque is reduced to something insignificant on the low speed axis of the wind turbine.

A wind turbine control system according to the present invention combines control means available in known wind turbines with a specific control unit for implementing the methods according to the present invention.

The control system receives input data such as rotor speed *W*, generator speed *rpm*, current *I* and torque *T* and send output data V_{ref} to the frequency converter 49 for creating an opposing torque to the cogging torque that allows a free idling situation

Although the present invention has been fully described in connection with preferred embodiments, it is evident that modifications may be introduced within the scope thereof, not considering this as limited by these embodiments, but by the contents of the following claims.

## Claims

1. Method for operating a wind turbine comprising a permanent magnet generator (41) driven by a wind rotor (15) that supply power to an electric grid (7) through a power electronics unit (47) **characterized in that**, when there is an idling situation wherein there is a cogging torque that can stop the wind rotor (15), **characterised in that** the frequency converter (49) of said power electronics unit (47) is arranged for controlling the current so that an opposing torque to said cogging torque is created allowing a free idling situation; and
**in that** said idling situation is detected when one of the following cases occurs:
a) a situation where the instantaneous speed (Wₗ) or the lowpass-filtered rotor speed (W₁), is below a predetermined value;
b) a situation where there are variations of the instantaneous speed (Wₗ) or the lowpass-filtered rotor speed (W_{f}) above first predetermined values due to cogging torque in a time interval T2;
c) a situation where there are variations of the instantaneous speed (Wᵢ) or the lowpass-filtered rotor speed (W_{f}) above second predetermined values due to cogging torque in a time interval T2 and the minimum or averaged instantaneous speed (Wₗ) or lowpass-filtered rotor speed (Wₗ) in said time interval T2 is below a predetermined value for each case.
d) a situation where the lowpass-filtered rotor speed (Wₗ), is below a predetermined value during a predefined period of time T1.

2. Method for operating a wind turbine according to claim 1, **characterized in that** said frequency converter (49) is arranged for making the generator (41) run at the speed of a free idling situation that is equal to the normal rotor speed (rpm_{ref}) during an idling situation.

3. Method for operating a wind turbine according to claim 1, **characterized in that** said frequency converter (49) is arranged for outputting a fixed current at the fixed frequency corresponding to the generator speed of a free idling situation that is equal to the normal rotor speed (rpm_{ref}) during an idling situation.

4. Method for operating a wind turbine according to claim 1, **characterized in that** said frequency converter (49) is arranged to apply a current-shaping to the output current for producing said opposing torque.

5. Method for operating a wind turbine according to any of claims 1-4, **characterized in that** the wind turbine is a direct drive wind turbine.

6. A control system for a wind turbine comprising a permanent magnet generator (41) driven by a wind rotor (15) that supply power to an electric grid (7) through a power electronics unit (47) including a frequency converter (49), devices for measuring or estimating at least rotor speed *W*, generator speed *rpm*, current *I* and torque *T*, **characterized in that** also comprises a control unit connected to said devices and to said frequency converter (49) adapted to carry out a method according to any of claims 1-5.

7. A wind turbine comprising a control system as claimed in claim 6.

## Patentansprüche

1. Methode zum Betreiben einer Windenergieanlage bestehend aus einem permanenten Magnetgenerator (41), angetrieben von einem Windrotor (15), der ein Stromnetz (7) durch eine elektronische Leistungseinheit (47) mit Leistung versorgt, **gekennzeichnet dadurch, dass** dann, wenn eine Leerlaufsituation eintritt, bei der ein ruckelndes Drehmoment vorhanden ist, das den Windrotor (15) stoppen kann, der Frequenzwandler (49) dieser elektronischen Leistungseinheit (47) den Strom steuert, sodass ein Gegendrehmoment zu dem genannten ruckelnden Drehmoment entsteht, sodass eine freie Leerlaufsituation möglich ist; und dass die genannte Leerlaufsituation erkannt wird, wenn die folgenden Fälle eintreten:
a) eine Situation, bei der die momentane Geschwindigkeit (Wi} oder die tiefpassgefilterte Rotorgeschwindigkeit (W₁) unter einem vorbestimmten Wert liegt;
b) eine Situation, bei der Variationen der momentanen Geschwindigkeit (W1) oder der tiefpassgefilterten Rotorgeschwindigkeit (W1) über den ersten vorbestimmten Werten aufgrund eines ruckelnden Drehmoments in einem Zeitintervall T2 vorhanden sind;
c) eine Situation, bei der Variationen der momentanen Geschwindigkeit (Wₗ) oder der tiefpassgefilterten Rotorgeschwindigkeit (W_{f}) über den zweiten vorbestimmten Werten aufgrund des ruckelnden Drehmoments in einem Zeitintervall T2 vorhanden sind und die momentane Mindest- oder Durchschnittsgeschwindigkeit (W[) oder tiefpassgefilterte Rotorgeschwindigkeit (Wₗ) in dem genannten Zeitintervall T2 unter einem für den jeweiligen Fall vorbestimmten Wert liegt;
d) eine Situation in der die tiefpassgefilterte Rotorgeschwindigkeit (Wₗ) während einer festgelegten Dauer T1 unter einem vorbestimmten Wert liegt.

2. Methode zum Betreiben einer Windenergieanlage gemäß Anspruch 1, **gekennzeichnet dadurch, dass** der genannte Frequenzwandler (49) so eingestellt ist, dass er den Generator (41) bei der Geschwindigkeit einer freien Leerlaufsituation laufen lässt, die gleich der normalen Rotorgeschwindigkeit (rpmᵣₑr) während einer Leerlaufgeschwindigkeit ist.

3. Methode zum Betreiben einer Windenergieanlage gemäß Anspruch 1, **gekennzeichnet dadurch, dass** der genannte Frequenzwandler (49) so eingestellt ist, dass er einen festgelegten Strom zur festgelegten Frequenz abgibt, entsprechend der Generatorgeschwindigkeit einer freien Leerlaufsituation, die gleich der normalen Rotorgeschwindigkeit (rpmᵣₑf) während einer Leerlaufgeschwindigkeit ist.

4. Methode zum Betreiben einer Windenergieanlage gemäß Anspruch 1, **gekennzeichnet dadurch, dass** der genannte Frequenzwandler (49) so eingestellt ist, dass er eine Stromformung auf den Ausgangsstrom anwendet, um das genannte Gegendrehmoment zu erzeugen.

5. Methode zum Betreiben einer Windenergieanlage gemäß einem der Ansprüche 1-4, **gekennzeichnet dadurch, dass** die Windenergieanlage eine Windenergieanlage mit Direktantrieb ist.

6. Ein Steuerungssystem für eine Windenergieanlage, das einen permanenten Magnetgenerator (41) enthält, angetrieben von einem Windrotor (15), der ein Stromnetz (7) durch eine elektronische Leistungseinheit (47) mit Leistung versorgt, einschließlich eines Frequenzwandlers (49), Geräte zum Messen oder Schätzen von mindestens der Rotorgeschwindigkeit *W*, Generatorgeschwindigkeit *rpm*, Strom *I* und Drehmoment *Tₛ*, **gekennzeichnet dadurch, dass** es auch eine Steuereinheit enthält, die an die genannten Geräte und an den genannten Frequenzwandler (49) angeschlossen und so angepasst ist, dass sie eine Methode gemäß einem der Ansprüche 1 bis 5 ausführen kann.

7. Eine Windenergieanlage, die ein Steuerungssystem gemäß Anspruch 6 enthält.

## Revendications

1. Méthode pour le fonctionnement d'un aérogénérateur comprenant un générateur à aimants permanents (41) entraîné par un rotor éolien (15) qui alimente un réseau électrique (7) à travers une unité électronique d'alimentation (47) **caractérisée en ce que**, s'il se produit une situation de marche au ralenti, il existe un couple de saillance qui peut stopper le rotor éolien (15), **caractérisée en ce que** le convertisseur de fréquence (49) de ladite unité électronique d'alimentation (47) est conçu pour contrôler le courant de sorte qu'un couple s'opposant audit couple de saillance est créé pour permettre une situation de libre marche au ralenti ; et **en ce que** ladite situation de marche au ralenti est détectée lorsque l'une des conditions suivantes est remplie :
a) une situation dans laquelle la vitesse instantanée (Wi} ou la vitesse du rotor filtrée en passe-bas (W₁) est inférieure à une valeur déterminée ;
b) une situation dans laquelle il existe des variations de la vitesse instantanée (W1) ou de la vitesse du rotor filtrée en passe-bas (W1) au-dessus de premières valeurs prédéterminées à cause du couple de saillance pendant un intervalle de temps T2 ;
c) une situation dans laquelle il existe des variations de la vitesse instantanée (Wₗ) ou de la vitesse du rotor filtrée en passe-bas (W_{f}) au-dessus de secondes valeurs prédéterminées à cause du couple de saillance pendant un intervalle de temps T2 et la vitesse instantanée minimale ou moyenne (W[) ou la vitesse du rotor filtrée en passe-bas (Wₗ) pendant ledit intervalle de temps T2 est inférieure à une valeur prédéterminée pour chaque cas ;
d) une situation dans laquelle la vitesse du rotor filtrée en passe-bas (Wₗ) est inférieure à une valeur déterminée pendant une période prédéterminée T1.

2. Méthode pour le fonctionnement d'un aérogénérateur selon la revendication 1, **caractérisée en ce que** ledit convertisseur de fréquence (49) est conçu pour faire fonctionner le générateur (41) à la vitesse d'une situation de libre marche au ralenti qui est égale à la vitesse normale du rotor (rpmᵣₑf) pendant une situation de marche au ralenti.

3. Méthode pour le fonctionnement d'un aérogénérateur selon la revendication 1, **caractérisée en ce que** ledit convertisseur de fréquence (49) est conçu pour fournir un courant fixé à la fréquence fixée correspondant à la vitesse du générateur dans une situation de libre marche au ralenti égale à la vitesse normale du rotor (rpmᵣₑf) pendant une situation de marche au ralenti.

4. Méthode pour le fonctionnement d'un aérogénérateur selon la revendication 1, **caractérisée en ce que** ledit convertisseur de fréquence (49) est conçu pour appliquer un profil de courant au courant de sortie pour produire ledit couple contraire.

5. Méthode pour le fonctionnement d'un aérogénérateur selon l'une des revendications 1 à 4, **caractérisée en ce que** l'aérogénérateur est un aérogénérateur à entraînement direct.

6. Un système de commande pour un aérogénérateur comprenant un générateur à aimants permanents (41) entraîné par un rotor éolien (15) qui alimente un réseau électrique (7) à travers une unité électronique d'alimentation (47) comprenant un convertisseur de fréquence (49), des dispositifs pour mesurer ou estimer au moins la vitesse du rotor *W*, la vitesse du générateur *rpm*, le courant *I* et le couple *Tₛ*, **caractérisé en ce qu'**il comprend également une unité de commande connectée auxdits dispositifs et audit convertisseur de fréquence (49) adaptée pour mettre en oeuvre une méthode selon l'une des revendications 1 à 5.

7. Un aérogénérateur comprenant un système de commande selon la revendication 6.
